# EUROPEAN PATENT SPECIFICATION

(11) **EP 2 583 593 B1**
(45) Date of publication and mention of the grant of the patent: **21.01.2015**
(21) Application number: 12005804.5
(22) Date of filing: 10.08.2012
(51) Int. Cl.: A47G 11/00, A61M 35/00, A01N 25/34, D21H 27/00, D21H 17/02, D21H 17/60, D21H 21/36

(54) **Disposable paper sheet comprising a antimicrobial and antibacterial substance**
Einweg-Papierbogen zur Anwendung in Industrie und Haushalt mit antimikrobielle und antibakterielle Substanz
Feuille de papier jetable pour usage industriel et domestique comprenant une substance antimicrobienne et antibactérienne

(30) Priority: 18.10.2011 IT AR20110020
(43) Date of publication of application: 24.04.2013
(73) Proprietor: Euro Vast S.P.A., 55012 Capannori (LU) (IT)
(72) Inventor: Romano, Vincenzo, 5510 Lucca (IT)
(74) Representative: Olivieri, Antonella

(56) References cited:
- WO-A1-2007/050242
- GB-A- 2 479 786
- JP-A- 6 321 722
- US-A1- 2003 064 189
- US-A1- 2004 161 450
- US-A1- 2007 071 537

## Description

The present invention relates to a disposable paper sheet for industrial and domestic usage .

They are readily available commercially paper sheets.

This type of sheet is suitable for hygienic use and is placed in apposite dispensing devices in the bathrooms of hotels, restaurants, bars and other public places, including hospitals or doctors' and dentists offices.

Existent towels, wipes, tissues and napkins of this type do not have the features required by hygiene regulations of proper practice for manufacturing materials and items which are intended to come into contact with food, and with the current guidelines on materials in contact with food, i.e. as specified in EC Regulation No. 1935/2004 and No. 2023/2006.

These products also neither meet the guidelines of the European Commission Directorate General on Health, Food Safety, Information and Consumer Protection (DG Sanco) nor the application of a high standard of hygiene increasingly felt by consumers.

Another drawback of these sheets is the fact that the electrostatic charges, created by the tissue or by the paper patina together with the ink, make the paper sheets slippery and therefore poorly adapted to realize paper with smooth and uniform surfaces, or to be used in external or aerated environments.

Because of these electrostatic charges, the sheets, that are normally stacked and packaged, tend to stick to one another and the user is forced to take them in a superior quantity than which in reality he would need.

Furthermore, these known disposable paper sheets, for industrial and domestic usage - that normally are distributed already cut in a standard format, stacked and packaged in parcels of a predetermined number of pieces -, have the disadvantage of offering a cumbersome stowage, so that when the user opens the parcels, unused sheets are easily contaminated.

This issue leads to a substantial waste of material, with respect to both economic and environmental impact.

The object of the present invention is to eliminate the drawbacks noted above in known types of disposable paper sheets for industrial and domestic usage, which allows to have disposable paper sheets, towels and wipes that are hygienically in accordance with the provisions of existing legislation and with standards demanded by the consumer.

Within this aim, an object of the present invention is to provide a disposable paper sheet, for industrial and domestic usage, which is easy to use and excludes problems related to electrostatic charges.

Another object of the present invention is that it eliminates the risk that a sheet may stick to the others and therefore can limit the waste of raw material and improve environmental impact.

It is another objective of the present invention to realize a non-slippery paper sheet so as to facilitate the grip of the user in any situation (even with he has wet hands).

It is therefore to be expected to provide a disposable paper sheet for industrial and domestic usage with means which are easily available commercially and by using commonly used materials, so that the device is economically competitive and easy to assemble.

This aim and these and others objectives which will become better apparent hereinafter, are achieved by a disposable paper sheet for industrial and domestic usage, according to the invention, as claimed in claim 1.

Further characteristics and advantages of the invention will become better apparent from the following detailed description of a preferred but not exclusive embodiment of the disposable paper sheet for industrial and domestic usage, illustrated by way of nonlimiting example, comprising at least one thickness of mutually coupled cellulose plies.

One of the features of the disposable paper sheet, according to the present invention, is that it comprises at least one layer of an antimicrobial and antibacterial substance which is associated with one face of the thickness of plies.

The antimicrobial and antibacterial substance comprises propolis or bee-glue.

Preferably, it may be provided that at least one edge of one disposable paper sheet is associated with the edge of another paper sheet and it is arranged to be uncoupled by tearing.

The present invention provides the disposable paper sheet for industrial and domestic usage in the form of a disposable paper wipe or tissue, which has the feature of comprising microcapsules containing water, a dry component and at least one active principle.

The active principle is a glycolic extract of Aloe Barbadensis, for the daily cleaning of dog and cat hair.

Each one of these microcapsules substantially comprises a percentage by weight of glycolic extract of aloe Barbademsis between 5% and 20%, water between 50% and 70% and the dry component between 35 and 50%. One possible example of embodiment may consist of a wipe having microcapsules that contain 10% glycolic extract Aloe Barbadensis, 56% water to 56% and 44% dry component.

Another active principle, in addition to the extract of aloe, may consist of an insect repellent, such as an anti-mosquito citronella repellent or an anti-mosquito odorless repellent.

The microcapsules may also contain perfumed essences.

Thus, it is possible to have microcapsules containing extracts of aloe, mosquito repellents and one or more perfumed or aromatic essences.

Preferably, the microcapsules may comprise essential oils, such as geranium and/or citronella, that scent the animal and serve as a repellent for insects.

These wipes have a great absorbing power and can take on large amounts of water. If moistened, they ensure hygiene and cleaning of the skin and fur of animals.

Passing the paper sheet on the coat of the animals, the microcapsules in it give off natural active ingredients and fresh herbs that promote the elimination of bad odors and release moisturizers.

The microcapsules contain natural ingredients that can be:
- aloe
- calendula
- Shea butter
- antibacterial (triclosan).

In this embodiment, it is provided that the sheets are made from a paper roll, for industrial and domestic usage, which has the peculiarity to consist in a succession of disposable paper sheets associated with each other.

Advantageously, each of these said paper sheets is formed by at least one die cut line which is substantially normal to the longitudinal direction of said roll.

From what has been described above it is therefore evident that the invention achieves the proposed aim and objectives and, in particular, the fact is stressed that a disposable paper sheet is provided, for industrial and domestic use, which allows it to be used as a mess-tin and support for food, and therefore which is consistent with both hygiene regulations on proper practice for manufacturing materials and items which are intended to come into contact with food products, and also it is consistent with the guidelines of the European Commission Directorate General on Health, Food Safety, Information and Consumer Protection, and eventually meet the needs of consumers, too.

The application of a natural antibacterial agent as propolis enhances the antimicrobial and antibacterial properties thanks to the flavonoids of which the propolis is rich (and in particular to the galangin and others flavonols as pinocembrina) which ensure the propolis a bacteriostatic action and bactericidal activity, for stimulating the immune processes which prevent the further proliferation of germs.

Another advantage of the invention is due to the fact that, the use of propolis allows the paper sheet to be used to wrap around the food since the presence of phenols also allows the usage of propolis (or of the essential oil extracted from Melaleuca) in the preservation of fat and food in general, instead of using chemical additives.

Furthermore, the realization of a paper roll according to the present invention, consisting of a sequence of mutually associated disposable paper sheets which are arranged to be individually detached, permits to eliminate the risk that the papers stick together, encouraging the saving of raw material with not just an economic benefit but also with an important environmental improvement.

Another advantage of the disposable paper sheet, according to the present invention, is due to the fact that the application of propolis, favors the formation of a rough surface such that the paper sheet is less slippery, thus facilitating the grip of the user even with oily or wet hands.

Another advantage of the present invention, is the fact that this product has a unique relationship between stowage volume and number of sheet, which allows a better and easier storage.

In addition to that, the implementation of a disposable paper sheet which comprises microcapsules containing water and at least one active principle, according to the invention, allows the daily dry cleaning of hair of the animals, removing large quantities water if passed on the hair of dogs, cats or other beasts. Also, it allows the moist cleaning of the animals, ensuring the hygiene of the skin and fur. This is due to the fact that the microcapsules in the paper sheet break with the rubbing and then release natural active ingredients, fresh herbs, moisturizers and, if necessary, insect repellents.

Moreover, the employment of means easily available commercially and the usage of common materials make the device economically competitive.

## Claims

1. A disposable paper sheet for industrial and domestic usage, comprising at least one thickness of mutually coupled cellulose plies, comprising at least one layer of an antimicrobial and antibacterial substance which is associated with one face of said at least thickness of plies, wherein said antimicrobial and antibacterial substance comprises propolis, **characterized in that** it comprises microcapsules which contain water, a dry component and at least one active principle, wherein said active principle is a glycolic extract of Aloe Barbadensis and wherein said microcapsules substantially comprise a percentage by weight of glycolic extract of aloe Barbadensis between 5% and 20%, water between 50% and 70% and said dry component between 35 and 50%.

2. The paper sheet according to one or more of the preceding claims, **characterized in that** it comprises at least one edge which is associated with the edge of another disposable paper sheet and is arranged to be uncoupled by tearing.

3. The paper sheet according to one or more of the preceding claims, comprising an additional active principle consisting in an insect repellent.

4. The paper sheet according to one or more of the preceding claims wherein said microcapsules comprise perfumed essences.

5. The paper sheet according to one or more of the preceding claims, wherein said microcapsules comprise essential oils.

6. A paper roll for industrial and domestic usage, **characterized in that** it consists of a sequence of paper sheets according to one or more of the preceding claims, mutually associated each other and arranged to be individually detached in order to be separately disposed.

7. The paper roll according to claim 7, wherein each one of said disposable paper sheet is formed by at least one die cut line which is substantially normal to the longitudinal direction of said roll.

## Patentansprüche

1. Einweg-Papierbogen zur Anwendung in Industrie und Haushalt, der wenigstens einen Schichtaufbau miteinander gekoppelter Celluloselagen umfasst und wenigstens eine Schicht einer antimikrobiellen und antibakteriellen Substanz umfasst, welche mit einer Seite des wenigstens einen Schichtaufbaus von Lagen verbunden ist, wobei die antimikrobielle und antibakterielle Substanz Propolis umfasst, **dadurch gekennzeichnet, dass** er Mikrokapseln umfasst, welche Wasser, eine Trockenkomponente und mindestens einen Wirkstoff umfassen, wobei der Wirkstoff ein glycolischer Extrakt aus Aloe Barbadensis ist und die Mikrokapseln im Wesentlichen einen Gewichtsanteil des glycolischen Extrakts aus Aloe Barbadensis von 5% bis 20%, Wasser von 50% bis 70% und der Trockenkomponente von 35 bis 50% umfassen.

2. Papierbogen gemäß Anspruch 1, **dadurch gekennzeichnet, dass** er wenigstens eine Kante umfasst, welche mit der Kante eines weiteren Einweg-Papierbogens verbunden ist und so ausgestaltet ist, dass er durch Reißen abgetrennt werden kann.

3. Papierbogen gemäß einem oder mehreren der vorhergehenden Ansprüche, umfassend einen weiteren Wirkstoff, der aus einem Insektenschutzmittel besteht.

4. Papierbogen gemäß einem oder mehreren der vorhergehenden Ansprüche, wobei die Mikrokapseln parfümierte Essenzen umfassen.

5. Papierbogen gemäß einem oder mehreren der vorhergehenden Ansprüche, wobei die Mikrokapseln ätherische Öle umfassen.

6. Papierrolle zur Anwendung in Industrie und Haushalt, **dadurch gekennzeichnet, dass** sie aus einer Abfolge von Papierbögen gemäß einem oder mehreren der vorhergehenden Ansprüche besteht, welche gegenseitig miteinander verbunden und so ausgestaltet sind, dass sie einzeln abtrennbar sind, um einzeln verwendet werden zu können.

7. Papierrolle gemäß Anspruch 6, wobei jeder Einweg-Papierbogen durch eine gestanzte Linie ausgebildet ist, welche im Wesentlichen senkrecht zur Längsrichtung der Rolle ist.

## Revendications

1. Feuille de papier jetable pour usage industriel et domestique, comprenant au moins une épaisseur de plis de cellulose mutuellement couplés, comprenant au moins une couche d'une substance antimicrobienne et antibactérienne qui est associée à une face de ladite ou desdites épaisseurs de plis, dans laquelle ladite substance antimicrobienne et antibactérienne comprend de la propolis, **caractérisée en ce qu'**elle comprend des microcapsules qui contiennent de l'eau, un composant sec et au moins un principe actif, dans laquelle ledit principe actif est un extrait glycolique d'Aloe Barbadensis et dans laquelle lesdites microcapsules comprennent sensiblement un pourcentage en poids d'extrait glycolique d'Aloe Barbadensis entre 5 % et 20 %, d'eau entre 50 % et 70 % et dudit composant sec entre 35 et 50 %.

2. Feuille de papier selon au moins l'une des revendications précédentes, **caractérisée en ce qu'**elle comprend au moins un bord qui est associé au bord d'une autre feuille jetable et est agencé pour être désolidarisé par déchirure.

3. Feuille de papier selon au moins l'une des revendications précédentes, comprenant un principe actif supplémentaire consistant en un insectifuge.

4. Feuille de papier selon au moins l'une des revendications précédentes, dans laquelle lesdites microcapsules comprennent des essences parfumées.

5. Feuille de papier selon au moins l'une des revendications précédentes, dans laquelle lesdites microcapsules comprennent des huiles essentielles.

6. Rouleau de papier pour usage industriel et domestique, **caractérisé en ce qu'**il consiste en une séquence de feuilles de papier selon au moins l'une des revendications précédentes, mutuellement associées les unes aux autres et agencées pour être individuellement détachées afin d'être jetées séparément.

7. Rouleau de papier selon la revendication 6, dans lequel chacune desdites feuilles de papier jetables est formée par au moins une ligne de découpage qui est sensiblement perpendiculaire à la direction longitudinale dudit rouleau.
